# DEMANDE DE BREVET EUROPEEN

(11) **EP 4 552 446 A1**
(43) Date de publication de la demande: **14.05.2025**
(21) Numéro de dépôt: 24211865.1
(22) Date de dépôt: 08.11.2024
(51) Int. Cl.: A01B 23/02, A01B 61/04, A01B 19/10

(54) **MACHINE DE TRAVAIL DU SOL**

(30) Priorité: 10.11.2023 BE 202305924
(71) Demandeur: Ets JOSKIN S.A., 4630 Soumagne (BE)
(72) Inventeur: JOSKIN, Victor, 4633 MELEN (SOUMAGNE) (BE)
(74) Mandataire: AWA Benelux

(57) **Abrégé**

La présente invention se rapporte à une machine de travail du sol comprenant au moins un cadre (1, 2) à atteler à un tracteur, ledit cadre (1, 2) portant une pluralité de traverses (9) montées librement pivotantes sur elles-mêmes dans leurs attaches au cadre, disposées à équidistance en travers du sens de marche, et supportant elles-mêmes à écart régulier une pluralité de dents (14, 15) en fil d'acier flexible fixées par paire, chaque dent comprenant une partie proximale (26) **caractérisée en ce que** la fixation d'une paire de dents (14, 15) est constituée d'un axe de fixation (20) unique enserrant une patte de fixation (19) unique, la traverse (9) concernée et un élément guide-support (18) unique dans lequel la paire de dents (14, 15) est insérée et un ressort (16, 17) associé à chacune des dents (14, 15), chaque ressort étant respectivement ancré entre la partie proximale de la dent (14, 15) à laquelle il est associé et la patte de fixation (19).

## Description

### Objet de l'invention

La présente invention se rapporte à une machine de travail du sol conçue pour l'entretien de surfaces de sol entre des plantes cultivées, par exemple en culture de pommes de terre, de maïs, de haricots, de colza et de céréales, ou en culture maraîchère.

Elle concerne plus particulièrement une machine généralement connue sous le vocable de « herse étrille », et dont le principe général est d'opérer une action de désherbage ou extirpation des adventices au moyen d'une pluralité de dents flexibles disposées sur une pluralité de rangées parallèles fixées sur un cadre porteur transversalement au sens de marche de la machine. Le cadre porteur est lui-même fixé à un châssis porteur ou peut en être partie intégrante.

### Arrière-plan technologique et état de la technique

Le document DE 20 115 048 U1 divulgue un exemple de réalisation tombé dans le domaine public d'une telle herse à dents flexibles. D'autres exemples sont encore divulgués par exemple dans DE 10 2007 008 616 A1, EP 3 753 386, EP 3 903 549, DE 10 2019 209 330 A1, AT521778 ou JP2005287366.

Tous ces documents montrent une recherche technique continue visant à maîtriser l'intensité du travail du sol produit par la herse étrille que ce soit en fonction de la nature et la résistance de la matière composant le sol et du type d'adventices à extirper, ou en fonction du degré de flexion des dents flexibles induit par le dénivelé naturel (par exemple en cas d'irrégularité du sol) ou voulu (par exemple, pour des buttes ou bandes de culture linéaire) du terrain à traiter.

Il a été fait usage du poids propre des sections de herse suspendues. Les caractéristiques du fil d'acier à partir duquel sont réalisées les dents ont été étudiées pour rechercher le bon compromis entre la résistance qui permet d'extirper les adventices et la flexibilité qui permet de préserver la culture qu'on se propose de nettoyer et la forme voulue du sol. Il a été adjoint différents dispositifs de ressorts complémentaires exerçant une force de compression ou de traction sur les dents, tantôt collectivement, tantôt individuellement.

Les recherches les plus récentes se concentrent sur des solutions visant à uniformiser le niveau d'intensité de travail de chaque dent individuellement quelle que soit sa position de débattement vertical. Il s'agit d'exercer la même force sur la surface à traiter et sur les adventices à extirper tant lorsque le plan de travail se situe au niveau de l'extrémité inférieure des roues de jauge que lorsque le plan de travail individuel d'une dent se situe plus bas, par exemple en cas de dépression locale dans le sol, ou plus haut, par exemple en cas d'ondulation positive du sol, qu'il s'agisse d'une irrégularité ou d'un dispositif de culture (tel que butte, bande, planche, etc.).

Divers dispositifs actuels jouent sur la force des ressorts individuels équipant chaque dent de la herse. Un dispositif propose de combiner des ressorts de force différenciée pour chaque dent. Un autre dispositif propose des mécanismes de réglage collectif différenciés pour opérer un réglage distinct sur les sections de herse travaillant sur des bandes. Le document AT521778 propose d'équiper la herse d'un circuit pneumatique mesurant la pression au moyen de petits vérins pneumatiques équipant chaque dent individuellement et chargés de réguler la pression cible sur les dents. Le document JP2004105340 propose une pluralité de dispositifs manuels permettant une infinité de réglages individuels différenciés ou non, cependant incompatibles avec les impératifs de l'agriculture moderne d'adaptation immédiate aux conditions de sol et néanmoins incapables de garantir une uniformité d'agressivité, flexibilité et souplesse des dents sur la course de leur débattement vertical, outre que les opérations de fixation, orientation et écartement précis des dents représentent une tâche ardue et fastidieuse, avec une multitude de liaisons à positionner, régler et fixer sans l'aide de repère.

Tous ces dispositifs pêchent par leur complexité, leur sophistication et/ou leur encombrement. La complexité tout comme la sophistication sont synonymes de coûts accrus de fabrication, donc d'acquisition, mais aussi de maintenance et de service. L'encombrement n'est pas gênant sur des machines de faible largeur, mais est un obstacle majeur au développement des machines de grande largeur de plus en plus demandées dans l'agriculture contemporaine.

### But de l'invention

Le but de l'invention est de fournir un dispositif de herse étrille combinant une conception simple et peu coûteuse du point de vue de la fabrication, du montage, de la maintenance et du service à l'usage, un design extrêmement compact compatible avec des machines de très grande largeur au travail qui peuvent se confiner au gabarit routier légalement autorisé, et une très large plage de travail uniforme, c'est-à-dire un comportement uniforme d'agressivité, de flexibilité et de souplesse des dents sur toute la course de leur débattement vertical, dès le début de cette course.

### Brève description de l'invention

Selon l'invention, le but précité est réalisé au moyen d'une structure de machine simple et compacte, sans double châssis, d'un concept de fixation simple et compacte des dents par paires, et une conception élaborée et perfectionnée des dents dissimulée dans une forme simple et élégante, étudiée pour garantir à la fois une grande souplesse à l'extrémité travaillante des dents et une plage de travail sur une grande course de débattement vertical avec une flexibilité uniforme sur toute cette plage.

La structure de la machine selon l'invention est basée sur un cadre central de préférence élargi d'un nombre de cadres latéraux articulés au départ du cadre central et repliés respectivement sur le cadre central ou sur le cadre latéral précédent par un moyen de puissance quelconque (hydraulique, électrique, etc.) actionné à distance en sorte de pouvoir réaliser des machines de grande largeur.

Les différents cadres sont pourvus chacun d'une pluralité de traverses fixées sur le cadre au moyen d'une fixation autorisant le pivotement de chaque traverse sur elle-même. Ces traverses supportent une pluralité de dents doubles précisément positionnées pour garantir, sur l'ensemble de la largeur de travail de la machine, un interligne de travail précis et uniforme de 25 mm, cet écart représentant le consensus actuel des instituts agronomiques mais n'étant pas un élément caractéristique de l'invention.

Les différentes traverses d'un cadre sont reliées au moyen de courts leviers à une tringlerie commune disposée longitudinalement au-dessus du cadre et pouvant être déplacée longitudinalement par un moyen de puissance quelconque pour orienter collectivement toutes les dents du cadre par pivotement des traverses en sorte de moduler l'angle d'attaque des dents sur la surface à traiter, respectivement la pression au sol exercée par les dents.

Enfin des blocs de roues de jauge sont disposés sur les flancs, de préférence antérieurs et postérieurs, des cadres pour garantir un appui uniforme au sol sur toute la surface de la machine, et procurer un dispositif de réglage de force d'appui au sol via un dispositif quelconque de réglage vertical de position des roues. Ce dispositif peut être individuel pour chaque bloc de roue afin de permettre une compensation éventuelle des dévers ou différences de hauteur de la surface travaillée.

Sur une machine selon l'invention, les dents sont fixées par paires au moyen d'un dispositif de fixation commun composé de seulement 5 pièces (outre les deux dents), à savoir une patte de fixation unique, deux ressorts, de type spirales ou autres, terminés en tige filetée avec écrou(s) de fixation / réglage, chaque ressort étant associé à l'une des dents de la paire de dents, un élément guide-support unique de préférence en matière synthétique auto-lubrifiante, enserrant une portion transversale de chacune des deux dents de la paire dents, et un axe de fixation unique (ensemble boulon ou tige filetée - écrou, rondelles, broche et goupille, ou autre) enserrant la patte de fixation unique, la traverse concernée et l'élément guide-support unique. Le design de cette fixation est étudié comme un dispositif détrompeur garantissant un positionnement précis des dents : la patte de fixation en tôle formée est conçue pour un positionnement unique possible en combinaison avec l'axe de fixation unique traversant la traverse de fixation et l'élément guide-support. Selon une autre modalité d'exécution, les ressorts pourraient être remplacés par tout autre dispositif de stabilisation de force.

Toujours sur une machine selon l'invention, les dents sont formées à partir d'un fil d'acier de diamètre approprié pour garantir une agressivité de désherbage suffisante sans arracher la culture travaillée. Le design des dents gauches et droites présente une forme différente, asymétrique, obligatoire pour s'accommoder du dispositif de fixation commun. Néanmoins, la longueur de fil d'acier est rigoureusement identique pour les dents gauches et les dents droites, et les formes respectives asymétriques des dents gauches et des dents droites sont étudiées pour réaliser un même comportement de flexibilité des deux types de dents.

La longueur de fil des dents est très importante relativement à la compacité du design pour garantir la souplesse d'attaque de la surface de culture, même inégale, avec une flexibilité très élevée à l'extrémité des dents au contact du sol.

La flexibilité d'ensemble de chaque dent est augmentée par le tracé de la dent comprenant un ensemble de portions étagées, combinant des portions longitudinales et transversales avec renvois d'angle, associant étirement et torsion multidirectionnels de l'acier avec addition de forces dont le travail individuel est divergent, la grande longueur des portions transversales accroissant d'autant la flexibilité. Les portions transversales et renvois d'angle sont en outre mis à profit pour réaliser de manière compacte la fixation commune d'une dent gauche et une dent droite au moyen d'un élément guide-support commun.

Enfin, la flexibilité de chaque dent est encore accrue par le ressort individuel qui la relie à la patte de fixation surmontant la traverse support et qui est ancré à cette dernière au moyen d'une tige filetée terminale et d'un écrou, respectivement d'un jeu d'écrous, permettant un réglage individuel de tension du ressort, donc un réglage de flexibilité individuel de chaque dent jusqu'à une décharge complète de tension, par exemple pour la maintenance ou le remplacement de la dent, ou encore pour une circonstance particulière où la dent ne devrait qu'effleurer le sol. Une courbure concave dans la zone terminale de chaque extrémité antérieure du fil d'acier de la dent, à hauteur de la traverse support, forme une butée de conception simple et intégrée à la dent, étudiée pour s'appuyer sur la traverse support lorsque la dent ne subit aucune pression de travail, en sorte que le ressort spirale n'est jamais libéré de toute tension en configuration de travail, y compris en position de repos. L'action des ressorts spirales est ainsi garantie sur toute la plage de travail, même en position de départ des dents.

Les avantages résultant d'un dispositif selon l'invention sont essentiellement au nombre de trois.

Primo, le dispositif offre un grand débattement vertical de dent avec une agressivité, une flexibilité, une souplesse de niveau quasi uniforme sur toute la course dès le début de celle-ci, pour une qualité de travail exemplaire.

Secundo, le dispositif se distingue par la simplicité de conception à tous niveaux (structure de la machine, et surtout structure de la fixation des dents et structure des dents elles-mêmes). C'est un atout décisif en termes de coûts, depuis les coûts de fabrication jusqu'aux frais de service après-vente (faible nombre de pièces, remplacement aisé, temps de travail restreint, etc.), en passant par les temps d'assemblage / montage. Et la simplicité est aussi gage de fiabilité et durabilité accrue.

Tertio, le design extrêmement compact est une condition sine qua non pour pouvoir réaliser des machines de très grande largeur au travail, qui peuvent se confiner au gabarit routier légalement autorisé.

Plus précisément, la présente invention se rapporte à une machine de travail du sol ou herse étrille selon les revendications 1 à 13. L'invention concerne également un élément individuel de herse étrille pour machine de travail du sol, selon la revendication 14.

### Brève description des figures

Des exemples de réalisation suivant l'invention sont décrits par la suite avec plus de détails à l'aide des figures annexées.

Par convention, pour les besoins de la description de ces figures, les termes avant, arrière, gauche et droit, de même que les nombres ordinaux, sont considérés par rapport au sens de marche du charroi (représenté par une grosse flèche de direction), les éléments examinés séparément devant être considérés dans leur position normale au sein du charroi complet. De manière similaire, les éléments structuraux tels des poutres seront qualifiés de longitudinaux et transversaux s'ils sont positionnés respectivement dans le sens parallèle et perpendiculaire au sens de la marche.

La **Figure 1** montre une vue générale en perspective de la machine de travail du sol selon l'invention.

La **Figure 2a** propose une perspective éclatée d'un élément de travail tandis que la **Figure 2b** montre une vue de côté du même élément de travail assemblé.

La **Figure 3** représente une vue de côté de la machine figurant les différentes positions possibles des éléments de travail en fonction des réglages de la machine.

### Description d'une forme d'exécution préférée de l'invention

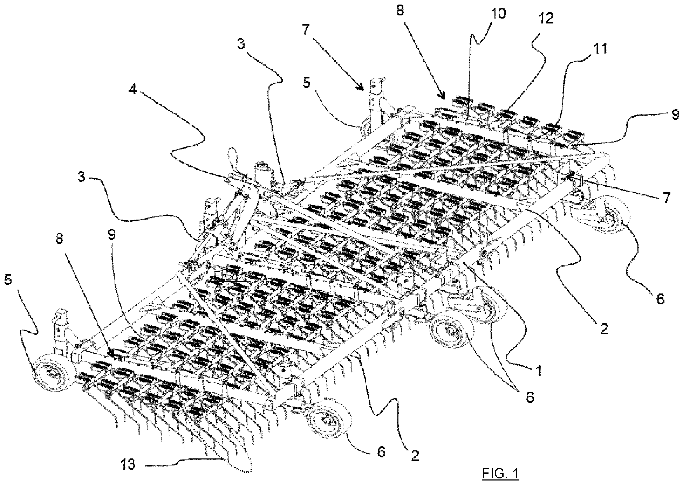

Un exemple de machine de travail du sol selon une modalité préférée de la présente invention est illustré à la **Figure 1****.** Il s'agit d'une machine destinée à être attelée à un véhicule de traction, par exemple un tracteur, ici non représenté. La structure de la machine est composée principalement d'un cadre central 1 auquel est fixé le dispositif d'attelage 4, et de préférence un ou plusieurs cadres latéraux 2 articulés à l'aide d'un dispositif de repliage 3 pour chaque cadre latéral 2 de manière à permettre le repliage de la machine vers une position de transport n'excédant pas la largeur réglementaire autorisée sur la voie publique.

Chaque cadre 1, 2 dispose d'au moins une roue de jauge antérieure 5 fixée de préférence sur la partie transversale avant du cadre et d'une roue de jauge postérieure 6 fixée de préférence sur la partie transversale arrière du cadre. Les roues de jauge offrent la garantie d'un appui uniforme au sol sur toute la surface de la machine ainsi qu'un suivi de terrain optimal. La hauteur de la machine peut être adaptée grâce au dispositif de réglage vertical 7 intégré à chaque roue de jauge, donnant ainsi à l'utilisateur la possibilité de faire varier à la fois la hauteur sous le cadre et l'agressivité du travail de la machine en modifiant l'angle d'attaque des éléments doubles de travail 13 par rapport au sol. La position individuelle de chaque roue de jauge antérieure 5 ou postérieure 6 sur le cadre peut être modifiée le long de l'axe transversal de la machine de manière à permettre d'adapter les traces à tout type de culture et d'interligne. Les roues de jauge 5 et 6 peuvent être à orientation fixe, mais sont de préférence dotées d'un dispositif d'orientation libre, surtout pour les roues de jauge postérieures 6, les rendant mobiles autour d'un moyeu auto-centrant. Ceci prévient le phénomène de ripage au cours des déplacements de la machine en courbes, pour une préservation maximale des cultures traitées.

Chaque cadre 1, 2 supporte une pluralité de traverses 9, par exemple au nombre de six par cadre 1, 2, formées de préférence de profilés cylindriques, disposées à équidistance perpendiculairement au sens de marche de la machine au travail, et attachées au cadre 1, 2 au moyen d'un dispositif quelconque autorisant le pivotement libre de chaque traverse 9 sur elle-même dans ses attaches.

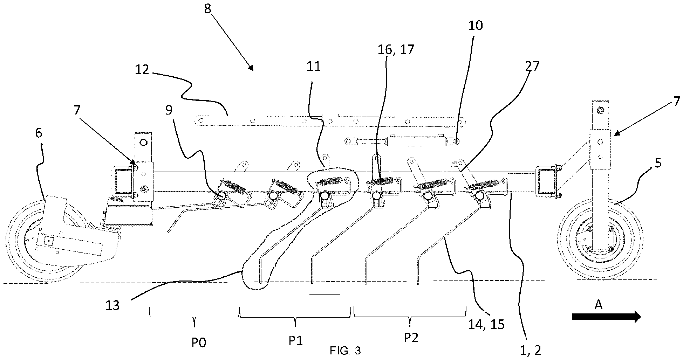

Sur chaque cadre 1, 2, un dispositif de réglage d'orientation 8 commande la rotation des traverses 9 sur elles-mêmes par l'entremise d'un élément de puissance 10 quelconque (hydraulique, électrique, etc.) actionné à distance. Ce dispositif de réglage d'orientation 8, également détaillé en **Figure 3****,** est constitué d'une bielle de liaison 12, à laquelle sont attachés, solidairement au moyen d'une liaison mobile, des leviers d'orientation 11 fixés sur chacune des traverses 9. L'action de l'élément de puissance 10, lié d'un côté au cadre 1, 2 et de l'autre à la bielle de liaison 12, impose un déplacement longitudinal de la bielle de liaison 12 entraînant un pivotement des leviers d'orientation 11 et, par conséquent, la rotation simultanée des traverses 9. La télécommande des éléments de puissance 10 du dispositif de réglage d'orientation 8 présent sur chaque cadre 1, 2 peut être indépendante ou groupée pour permettre à l'utilisateur d'adapter au mieux la qualité de travail de la machine à la surface à traiter.

Chaque traverse 9 supporte une pluralité de doubles éléments de travail 13 précisément agencés à équidistance. La position des doubles éléments de travail 13 sur les traverses 9 successives est légèrement décalée latéralement par rapport à la traverse 9 antérieure selon un calcul permettant d'obtenir un interligne de travail uniforme sur l'ensemble de la machine. Dans l'exemple illustré, cet interligne est de 25 mm, sans que cette distance ne soit caractéristique de l'invention, toute autre mesure d'interligne pouvant parfaitement être réalisée.

Cet agencement décalé sur plusieurs rangées successives procure une capacité accrue d'évacuation des matières organiques grâce à l'espace longitudinal entre les traverses 9 successives qui favorise le passage des déchets en cas d'accumulation.

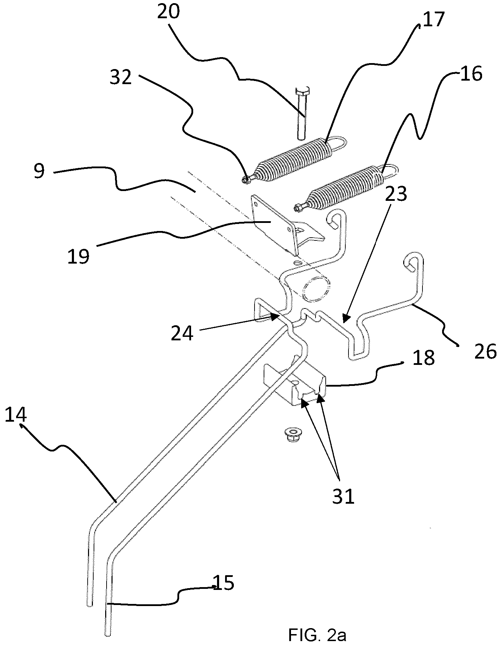

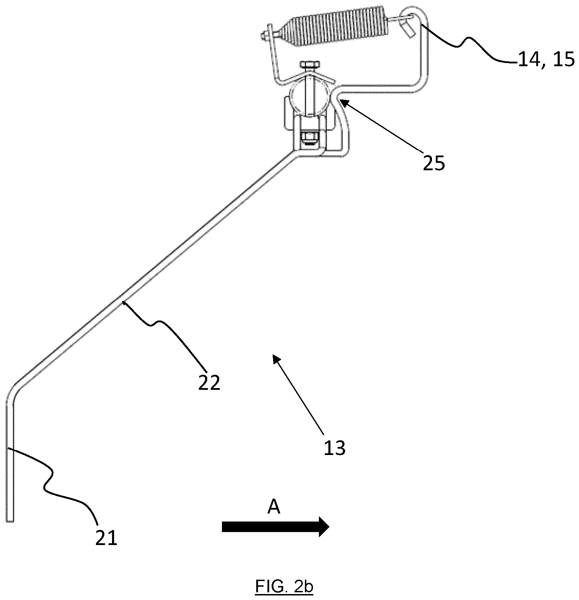

La composition des doubles éléments de travail 13 est illustrée en **Figure 2a** et **Figure 2b****.** Elle se limite en tout et pour tout à sept composants : une dent gauche 14, une dent droite 15 dont la forme n'est pas une symétrie de la forme de la dent gauche, deux ressorts identiques 16, 17, un élément guide-support 18, une patte de fixation unique 19 et un axe de fixation unique 20. Plus précisément, chaque ressort 16, 17 est associé à l'une des deux dents 14, 15, et est un élément distinct de la dent 14, 15 avec laquelle il coopère.

Chaque dent 14, 15 est formée à partir d'un fil d'acier de diamètre approprié pour garantir une agressivité de désherbage et une attaque du sol suffisante sans arracher la culture travaillée, d'une longueur importante pour en assurer la flexibilité voulue et d'une forme spécifiquement étudiée pour que chaque dent 14, 15 développe un comportement de flexion quasi uniforme sur toute sa plage de débattement vertical, et qu'une dent gauche 14 et une dent droite 15 puissent être supportées par paire au moyen d'un seul et unique élément guide-support 18.

Chaque dent comporte une série de portions étagées 21, 22, 23, 24, 25, 26, entre une partie distale de la dent située du côté du sol et une partie proximale de la dent située du côté du cadre de support 1, 2. Les parties distale et proximale sont situées dans un plan vertical parallèle au sens de la marche A, et sont situées de part et d'autre d'une portion transversale 23, 24. En particulier, en partant du côté sol, chaque dent comporte au moins une première portion inférieure 21 en contact avec le sol et une deuxième portion intermédiaire 22 oblique par rapport à la première portion 21,situées l'une et l'autre dans un plan vertical parallèle au sens de marche A, suivies de la portion transversale 23, 24, substantiellement perpendiculaire à la précédente et parallèle à la traverse 9, servant au maintien de la dent 14, 15 respective contre ladite traverse 9, puis d'une portion supérieure 26, située dans un second plan vertical parallèle au sens de marche A, comportant plusieurs plis angulaires successifs et dont la partie proximale est terminée par une boucle ou tout autre moyen ou dispositif pouvant servir de point d'accroche pour le ressort 16, 17 respectif.

Le tracé des dents 14, 15 est développé pour présenter une longueur de fil rigoureusement identique entre la dent gauche 14 et la dent droite 15, malgré leur forme différente et asymétrique dictée par leur dispositif de fixation. Leurs portions transversales respectives 23, 24 doivent en effet se côtoyer dans l'élément guide-support 18. La raison d'être des plis angulaires successifs des dents 14, 15 est précisément d'uniformiser la longueur de fil des deux types de dents 14, 15 et de compenser leur décalage dans l'élément guide-support 18, mais aussi d'uniformiser le comportement de flexibilité des dents 14, 15 sur toute leur plage de débattement vertical. Cette uniformisation provient de la combinaison de la longueur de fil d'acier, proportionnellement très importante par rapport à la compacité du design de l'ensemble du double élément de travail 13, et de la succession de portions longitudinales, de portions transversales et de plis angulaires, la combinaison se traduisant, au travail, par un ensemble de forces de flexion et de torsion multidirectionnelles dont le travail physique se compose et/ou se compense pour uniformiser le comportement de flexibilité dans toutes les positions d'étirement de la dent 14, 15 au travail résultant d'irrégularités du sol, de la présence de buttes ou planches de culture, du passage de débris végétaux, etc., l'ensemble de ces positions de travail composant leur plage de flexion. En d'autres termes, le couple résultant de la flexion des portions étagées 21, 22, 23, 24, 25, 26 et de la tension du ressort 16, 17 est quasiment inchangé tout au long de la plage de flexion de la dent 14, 15 de sorte que celle-ci présente une résistance quasiment uniforme sur l'ensemble de sa plage de flexion. La combinaison de ces caractéristiques permet de fournir une qualité de travail du sol exemplaire, même sur buttes ou planches de culture.

En outre, une courbure concave 25 est intégrée dans le fil d'acier au niveau de la partie basse de la portion supérieure 26 de chaque dent 14, 15, au-dessus de la portion transversale 23, 24 et à hauteur de la traverse 9, en sorte qu'en configuration de travail, la dent 14, 15 s'appuie à cet endroit sur la traverse 9 lorsque la dent 14, 15 n'est pas sollicitée. La hauteur de la courbure concave 25 par rapport au plan longitudinal de la portion étagée principale 22 est telle que l'effort de traction sur le ressort correspondant 16, 17 n'est jamais nul. Ceci forme une butée de conception simple et intégrée, chargée de garantir que le ressort 16, 17 soit toujours maintenu, même en position de repos, dans un état de tension pour toujours procurer une contre-pression à la dent respective 14, 15.

Les deux dents 14, 15 sont maintenues contre la traverse 9 par un élément guide-support 18 fabriqué de préférence en matière synthétique auto-lubrifiante, doté d'une forme épousant la traverse 9 avec une zone intérieure évidée présentant deux rainures 31, ou plus simplement deux gorges ou rigoles résultant d'une forme bombée ou conique du fond de l'évidement du guide-support 18, pour y loger côte-à-côte les portions transversales 23, 24 respectives de la dent gauche 14 et de la dent droite 15. Ce design autorise la rotation libre des dents 14, 15 dans l'élément guide-support 18 qui enferme ainsi leur point de pivot respectif autour d'un axe transversal. Comme les points de pivots de la dent gauche 14 et de la dent droite 15 ainsi écartés sont différents et pourraient causer un comportement divergent des dents 14, 15, rappelons que cet écart est compensé par la forme spécifique différente de la portion supérieure des dents 14, 15.

L'élément guide-support 18 est de préférence apposé contre la partie inférieure de la traverse 9 pour ménager une garde-au-sol maximale ainsi qu'une protection optimale des cultures levées. Néanmoins, au prix d'un design adapté des dents 14, 15, l'élément guide-support 18 pourrait tout aussi bien être apposé sur une autre partie de la traverse 9.

Une patte de fixation 19 est positionnée sur la partie de la traverse 9 opposée à celle à laquelle est apposée l'élément guide-support 18. Il s'agit d'une pièce en matière rigide, par exemple une tôle formée, dont le profil intègre une portion plate dotée de deux orifices et une portion essentiellement perpendiculaire, dotée d'un orifice et d'une forme propre à épouser la traverse 9 et à constituer un dispositif détrompeur visant à n'autoriser qu'un seul positionnement possible de la patte de fixation 19 sur la traverse 9 comprenant un orifice correspondant à celui de la portion perpendiculaire de la patte de fixation, en sorte de garantir une position de travail toujours parfaite, même en cas de remplacement d'une ou plusieurs dents 14, 15.

Un unique axe de fixation 20, par exemple un ensemble de boulonnerie, une broche goupillée ou toute autre fixation appropriée, passe successivement au travers de l'orifice ménagé dans la portion de la patte de fixation 19 accolée à la traverse 9, dans l'orifice ménagé dans la traverse 9 et dans un orifice ménagé dans l'élément guide-support 18, enserrant l'élément guide-support 18 et la patte de fixation 19 dans une position fixe et rigoureusement déterminée sur la traverse 9, les dents 14, 15 étant elles-mêmes maintenues par leur portion transversale respective 23, 24 enfermée au sein de l'élément guide-support 18.

Entre la boucle ou autre dispositif de fixation terminal(e) de chaque dent 14, 15 et la patte de fixation 19 sont disposés deux ressorts 16 et 17 identiques, par exemple des ressorts spirales, d'une force appropriée pour la combinaison recherchée d'agressivité, flexibilité et souplesse des dents 14, 15 au travail. Ces ressorts 16, 17 sont terminés du côté antérieur par une boucle dans laquelle vient s'insérer la boucle ou autre dispositif de fixation terminal(e) de la dent respective 14, 15, et du côté postérieur par une tige filetée boulonnée 32 s'insérant dans le percement correspondant de la portion plate de la patte de fixation 19. Chaque ressort 16, 17 est ancré à la patte de fixation au moyen d'un écrou enroulé autour de la tige filetée du côté postérieur de la patte de fixation 19, ou deux écrous serrés de part et d'autre de la patte de fixation 19 selon que l'on veut disposer d'un moyen de réglage individuel fixe ou lâche de la tension du ressort 16, 17. Le ressort 16 disposé à droite est lié à la dent gauche 14 et le ressort 17 disposé à gauche est lié à la dent droite 15. La position du ou des écrous sur la longueur de la tige filetée 32 détermine la force de traction exercée par le ressort 16, 17 correspondant.

Le dispositif utilisé est simplifié par l'utilisation d'éléments communs pour un couple de dents 14, 15, permettant avantageusement de diviser par deux le nombre d'éléments guides-supports 18, de pattes de fixation 19 et d'axes de fixation 20 pour un nombre de dents identique par rapport à une fixation individuelle des dents sur les traverses 9. Le temps de montage s'en trouve par conséquent significativement réduit, entraînant une diminution des coûts de fabrication de la machine de travail du sol. Cette conception simple offre également un avantage stratégique pendant les campagnes de maintenance et de service après-vente de la machine en réduisant à la fois le nombre de pièces de rechange à prévoir et le temps de travail nécessaire à leur remplacement lors des interventions sur la machine.

Au travail, l'agressivité des dents 14, 15 est contrebalancée par l'action des ressorts 16, 17 qui absorbent les irrégularités du sol et apportent de la souplesse qui est compensée par l'angle de travail des dents 14, 15. Les dents gauche 14 et droite 15 assemblées au sein d'un même double élément de travail 13 sont entièrement indépendantes l'une de l'autre.

La **Figure 3** montre différentes positions limites des doubles éléments de travail 13 par rapport au cadre 1, 2 de la machine selon l'invention. Sur une vue de côté de la machine, on a représenté les composants du dispositif de réglage d'orientation 8 en vue éclatée, avec une orientation différente des leviers d'orientation 11 de chaque traverse 9. Pour rappel, l'élément de puissance 10, ici un vérin hydraulique, est ancré d'un côté, ici côté fût, à un point fixe du cadre 1,2, ici une patte d'ancrage 27 disposée sur une poutre longitudinale du cadre 1, 2, et est connecté de l'autre côté, ici côté tige, à la bielle de liaison 12. Il va sans dire qu'il s'agit ici d'une figuration irréaliste mais didactique puisque chaque levier d'orientation 11 est, dans la réalité, lié à un trou respectif de la bielle de liaison 12 qui, sous l'action de l'élément de puissance 10, les oriente tous ensemble selon un angle identique. Il s'agit ici d'évoquer sur une illustration unique différentes positions limites engendrées par le dispositif de réglage d'orientation 8.

La position P0 représente les doubles éléments de travail 13 placés en position de repli maximal. Lorsque les dents 14, 15 se trouvent dans la position P0, la bielle de liaison 12 du dispositif de réglage d'orientation 8 est dans sa position la plus avancée sur le cadre 1, 2 en direction du tracteur. Dans cette position particulière, chaque dent 14, 15 vient se placer au plus près du cadre 1, 2, présentant ainsi un design avantageusement compact. Celui-ci rend possible la création de herse-étrilles de très grande largeur de travail, tout en satisfaisant au gabarit routier légalement autorisé en permettant de replier des cadres latéraux 2 successifs les uns à côté des autres, par exemple en accordéon, au-dessus du cadre central 1, au moyen du dispositif de repliage 3, le cas échéant multiplié.

La position P1 représente les éléments doubles de travail 13 dans une position de travail où les dents 14, 15 sont en contact avec le sol et les ressorts 16, 17 dans leur état de tension initial. Le passage de la position P0 à la position P1 est réalisé en actionnant le dispositif de réglage d'orientation 8, permettant de faire varier la position angulaire des leviers d'orientation 11, entraînant le pivotement des traverses 9 jusqu'à ce que les dents 14, 15 se trouvent en contact avec le sol. La force exercée par les dents 14, 15 sur le sol est alors à son minimum. Cette force développée au contact avec le sol est proportionnelle à la tension des ressorts 16, 17, elle-même proportionnelle à l'élongation desdits ressorts 16, 17. La rotation de la traverse 9 induit une variation de la distance entre d'une part les dents 14, 15 qui restent en position inchangée relativement au sol et d'autre part la patte de fixation 19 solidaire de la traverse 9, entraînant de ce fait l'élongation des ressorts 16, 17 résultant en un accroissement de leur force de traction qui est alors répercutée au sol à travers chaque dent 14, 15.

Lorsque la bielle de liaison 12 du dispositif de réglage d'orientation 8 atteint, par l'action de l'élément de puissance 10, sa position la plus reculée sur le cadre 1, 2 par rapport au tracteur, les dents 14, 15 se trouvent dans la position limite P2 et la tension des ressorts respectifs 16, 17 ainsi que la force exercée sur le sol sont à leur maximum.

Bien sûr, la Figure 3 n'illustre pas la flexion que subissent les dents 14, 15 au travail en raison des irrégularités du sol, de la présence de buttes ou planches de culture, et du passage de débris végétaux. Cette souplesse, cette capacité de flexion se traduit par une vibration constante des dents 14, 15 au travail, qui, en combinaison avec l'agencement décalé des doubles éléments de travail 13 sur les traverses successives, favorisent l'évacuation des adventices, débris végétaux, corps étrangers et autres obstacles.

La hauteur du cadre 1, 2 par rapport au sol, donc de la garde au sol de la machine, est déterminée par la position du dispositif de réglage de hauteur 7 intégré aux roues de jauge antérieures 5 et postérieures 6. Il s'agit d'un dispositif de réglage quelconque connu de l'homme de l'art. Dans l'exemple illustré, un montant supportant la roue de jauge 5, 6 et pourvu de trous transversaux à différentes hauteurs se glisse dans un profilé carré fixé au cadre 1, 2 et pourvu d'au moins un trou transversal. Le réglage de hauteur s'effectue en insérant un axe de fixation à travers un ou plusieurs trous du montant de roue et le ou les trous correspondants du profilé carré.

La combinaison de la force appliquée au sol par la herse étrille et des caractéristiques du sol à traiter (compaction, température, taux d'humidité, etc.) résulte en une pénétration plus ou moins importante des dents sous la surface du sol. La profondeur de travail est déterminante pour le traitement correct de la surface et doit être maîtrisée pour éliminer les adventices dont les racines sont encore quasi inexistantes ou peu développées sans abîmer les cultures qui disposent déjà de racines plus profondes au moment du passage de la machine. La profondeur de pénétration optimale dans le sol doit ainsi être suffisamment importante pour déloger les adventices tout en étant assez faible pour ne pas arracher les racines des cultures à traiter. Il en découle qu'au travail, la force transmise au sol par les dents 14, 15 doit pouvoir varier continuellement entre un minimum (position P1) et un maximum (position P2) et doit pouvoir être adaptée avec précision selon les besoins de l'utilisateur à chaque début de travail voire même en cours de travail à l'aide du dispositif de réglage d'orientation 8 présent sur chaque cadre 1, 2 et télécommandé depuis le poste de conduite du tracteur.

La force exercée par les dents 14, 15 sur le sol est constante quel que soit le profil du terrain pour un réglage donné du dispositif de réglage d'orientation 8 du cadre 1, 2. Chaque dent 14, 15 possède un débattement vertical très important lui conférant la possibilité de traiter de manière identique les profils de sol les plus complexes, comme par exemple les buttes servant à la culture de pommes de terre ou les planches de culture maraîchère, grâce au fait que la force appliquée au sol et par conséquent la profondeur de travail reste constante quel que soit l'angle entre la dent 14, 15 et le cadre 1, 2 par la combinaison de deux facteurs dont les effets s'annulent. D'une part, si la hauteur entre le cadre 1, 2 et le sol diminue par endroits, la dent 14, 15 va suivre le sol et effectuer une rotation autour de son point de pivot. Le ressort 16, 17 respectivement fixé à l'extrémité supérieure de la dent 14, 15 va voir un accroissement de son élongation et donc de sa tension, et la dent va alors transmettre une force plus importante vers le sol. D'autre part, la rotation de la dent 14, 15 par rapport au cadre 1, 2 va modifier la géométrie du système, résultant en un accroissement du bras de levier de la dent et à une diminution de l'angle d'attaque de la dent par rapport au sol tendant à réduire à la fois la force transmise par la dent vers le sol et l'agressivité de la dent. Le design de la dent 14, 15 est étudié pour que ces deux éléments s'annulent, permettant individuellement à chaque dent de produire un travail constant sur le sol, indépendamment des variations du terrain, pour chaque intensité de travail choisie par l'intermédiaire de la position angulaire des traverses 9, grâce aussi à la grande plage de flexibilité des dents 14, 15 résultant de leur design déjà évoqué.

Nonobstant le fait que la présente invention a été exposée au moyen d'une description détaillée explicitant une modalité d'exécution et différents aspects de l'invention, l'homme de l'art verra que la portée complète de l'invention n'est nullement limitée à l'exemple présenté ici. L'invention a une portée qui est proportionnelle aux revendications du présent brevet, incluant tous éléments ou aspects qui seraient considérés comme équivalents à ceux exposés dans les revendications principales ou dépendantes.

Partant, constituent des variantes d'exécution de l'invention un dispositif complexe à plus d'un niveau de repliement, mettant par exemple en oeuvre plusieurs cadres latéraux 2 successifs d'un même côté du cadre central 1, avec palier intermédiaire permettant d'actionner chaque cadre latéral 2 séparément, permettant de régler la largeur de travail de la machine sur plusieurs positions. Pareillement, le dispositif de repliage 3 des cadres latéraux 2 peut être désolidarisé pour permettre le réglage de largeur de travail sur des positions symétriques ou asymétriques, par exemple pour traiter les fins de parcelle, les parcelles en pointe, etc.

### Liste des symboles de référence

- 1: Cadre central
- 2: Cadre latéral
- 3: Dispositif de repliage
- 4: Dispositif d'attelage
- 5: Roue de jauge antérieure
- 6: Roue de jauge postérieure
- 7: Dispositif de réglage vertical
- 8: Dispositif de réglage d'orientation
- 9: Traverse
- 10: Élément de puissance
- 11: Levier d'orientation
- 12: Bielle de liaison
- 13: Double élément de travail
- 14: Dent gauche
- 15: Dent droite
- 16: Ressort droit (pour dent gauche)
- 17: Ressort gauche (pour dent droite)
- 18: Élément guide-support
- 19: Patte de fixation
- 20: Axe de fixation
- 21: Portion inférieure de dent
- 22: Portion intermédiaire de dent
- 23: Portion transversale de dent gauche
- 24: Portion transversale de dent droite
- 25: Butée (courbure concave de dent)
- 26: Portion supérieure de dent
- 27: Patte d'ancrage
- 31: Rainure(s) de guide-support
- 32: Tige filetée boulonnée
- A: Sens de marche
- P0: Position repliée
- P1: Position de travail force minimum
- P2: Position de travail force maximum

## Revendications

1. Machine de travail du sol comprenant au moins un cadre (1, 2) à atteler à un tracteur, ledit cadre (1, 2) portant une pluralité de traverses (9) montées librement pivotantes sur elles-mêmes dans leurs attaches au cadre, disposées à équidistance en travers du sens de marche, et supportant elles-mêmes à écart régulier une pluralité de dents (14, 15) en fil d'acier flexible fixées par paire **caractérisée en ce que** la fixation d'une paire de dents (14, 15) est constituée d'un axe de fixation (20) unique enserrant une patte de fixation (19) unique, la traverse (9) concernée et un élément guide-support (18) unique dans lequel la paire de dents (14, 15) est insérée, et deux ressorts (16, 17) associés chacun à l'une des dents (14, 15), chaque ressort étant respectivement ancré entre la partie proximale (26) de la dent (14, 15) à laquelle il est associé et la patte de fixation (19).

2. Machine de travail du sol selon la revendication 1, **caractérisée en ce que** les dents (14, 15) en fil d'acier sont formées d'une pluralité de portions étagées (21, 22, 23, 24, 25, 26) s'étendant dans des directions multiples avec une succession de plis renvois d'angles dans lesdites directions multiples, dont une portion transversale (23, 24), substantiellement perpendiculaire au plan de travail de la dent (14, 15) et parallèle aux traverses (9).

3. Machine de travail du sol selon l'une quelconque des revendications précédentes, **caractérisée en ce que** la dent (14), constituant la dent gauche de la paire fixée, et la dent (15), constituant la dent droite de la paire fixée, ont des formes différentes et asymétriques mais une longueur rigoureusement identique.

4. Machine de travail du sol selon l'une quelconque des revendications précédentes, **caractérisée en ce que** les dents (14, 15) sont liées à la patte de fixation (19) au moyen d'éléments distincts constitués des ressorts (16, 17) et sont montées librement pivotantes sur un point d'appui situé à l'intérieur de l'élément guide-support (18) accolé à la traverse (9) correspondante.

5. Machine de travail du sol selon l'une quelconque des revendications précédentes, **caractérisée en ce que** le couple résultant de la flexion des portions étagées (21, 22, 23, 24, 25, 26) et de la tension des ressorts (16, 17) est substantiellement inchangé tout au long de la plage de flexion des dents (14, 15) de sorte que celles-ci présentent une résistance substantiellement uniforme sur l'ensemble de ladite plage de flexion.

6. Machine de travail du sol selon l'une quelconque des revendications précédentes, **caractérisée en ce que,** dans une portion terminale (26) de chaque extrémité antérieure du fil d'acier constituant une dent (14, 15), à hauteur de la traverse (9), est présente une courbure concave (25) s'appuyant sur la traverse (9) lorsque la dent correspondante (14, 15) n'est pas sollicitée, formant ainsi une butée de conception simple et intégrée à la dent (14, 15).

7. Machine de travail du sol selon la revendication 6, **caractérisée en ce que** la courbure concave (25) formant butée pour la dent (14, 15) présente, par rapport au plan longitudinal de la portion intermédiaire (22) située dans un plan vertical parallèle au sens de marche (A), une hauteur telle que lorsque la courbure concave (25) appuie sur la traverse (9), l'effort de traction sur le ressort correspondant (16, 17) n'est jamais nul.

8. Machine de travail du sol selon la revendication 4, **caractérisée en ce que** les ressorts (16, 17) ont une partie terminale postérieure constituée d'une tige filetée (32) traversant la patte de fixation (19) et de préférence ancrée à celle-ci au moyen d'un écrou enroulé du côté postérieur de la patte de fixation (19) ou de deux écrous enserrant la patte de fixation (19), la position du ou des écrous sur la longueur de la tige filetée (32) déterminant la force de traction exercée par le ressort (16, 17) correspondant.

9. Machine de travail du sol selon la revendication 2, **caractérisée en ce que** l'élément guide-support (18) est en matière synthétique auto-lubrifiante et comporte deux rainures, gorges ou rigoles (31) permettant de localiser des portions transversales (23, 24) respectives des dents (14, 15).

10. Machine de travail du sol selon l'une quelconque des revendications précédentes, **caractérisée en ce que** la patte de fixation (19) comprend une aile de forme épousant celle de la traverse (9), et percée d'un orifice correspondant à un orifice prévu sur la traverse (9), n'autorisant ainsi qu'un positionnement unique possible de ladite patte de fixation (19) sur la traverse (9).

11. Machine de travail du sol selon l'une quelconque des revendications précédentes, **caractérisée en ce que** les orifices des traverses (9) sont positionnés de manière telle que les paires de dents (14, 15) sont disposées sur les traverses (9) successives avec un décalage transversal régulier résultant **en ce que** chacune des dents (14, 15) équipant la machine travaille le sol sur une ligne longitudinale distincte de toutes les autres et que l'écart entre toutes les lignes de travail est identique.

12. Machine de travail du sol selon l'une quelconque des revendications précédentes, **caractérisée en ce que** les traverses pivotantes (9) comportent chacune un levier d'orientation (11) connecté en liaison pivotante à une bielle mobile (12) elle-même reliée à un élément de puissance (10) ancré à un point fixe de la machine et capable de déplacer la bielle (12) en sorte de modifier conjointement l'orientation de tous les leviers (11) de traverses (9).

13. Machine de travail du sol selon l'une quelconque des revendications précédentes, **caractérisée en ce que,** quelle que soit la position angulaire des traverses (9), la géométrie des portions étagées (21, 22, 23, 24, 25, 26) avec leur succession de directions multiples permet une résultante nulle des forces dues d'une part à l'élongation des ressorts (16, 17) et d'autre part à la modification de l'angle compris entre les dents (14, 15) et le cadre (1, 2), de sorte que le travail de chaque dent (14, 15) sur le sol n'est pas modifié par les variations du terrain.

14. Ensemble de pièces pour machine de travail du sol, comprenant une traverse (9) et une pluralité de dents (14, 15) en fil d'acier flexible, destinées à être supportées par paires à écart régulier par la traverse (9), ainsi que des éléments de fixation des dents (14, 15) à la traverse (9) **caractérisé en ce que** lesdits éléments de fixation d'une paire de dents (14, 15) sont constitués d'un axe de fixation (20) unique, une patte de fixation (19) unique, un élément guide-support (18) unique, et deux ressorts (16, 17), les dents (14, 15) en fil d'acier étant de longueur rigoureusement identique mais de forme asymétrique constituée d'une pluralité de portions étagées différentes (21, 22, 23, 24, 25, 26) s'étendant dans des directions multiples avec une succession de plis renvois d'angles dans lesdites directions multiples, les dents (14, 15) étant aptes à être attachées à la patte de fixation (19) au moyen des ressorts (16, 17) respectifs et à être montées pivotantes sur un point d'appui situé à l'intérieur de l'élément guide-support (18) accolé à la traverse (9), l'élément guide-support (18) étant de préférence en matière synthétique auto-lubrifiante et comportant deux rainures, gorges ou rigoles (31) permettant de localiser des portions transversales (23, 24) respectives desdites dents (14, 15), une portion terminale (26) de chaque extrémité antérieure du fil d'acier constituant une dent (14, 15) présentant une courbure concave (25) permettant à la dent de s'appuyer, une fois montée, sur la traverse (9), formant ainsi une butée intégrée à la dent (14, 15).
